(19) Europäisches Patentamt
European Patent Office
Office européen des brevets

(11) **EP 4 768 608 A1**

(12) **EUROPEAN PATENT APPLICATION**
published in accordance with Art. 153(4) EPC

(43) Date of publication:
**01.07.2026 Bulletin 2026/27**

(21) Application number: **24867924.3**

(22) Date of filing: **31.07.2024**

(51) International Patent Classification (IPC):
**C21B 11/10** (2006.01)    **C21C 5/52** (2006.01)

(52) Cooperative Patent Classification (CPC):
**C21B 11/10; C21C 5/52;** Y02P 10/20

(86) International application number:
**PCT/JP2024/027268**

(87) International publication number:
**WO 2025/062843 (27.03.2025 Gazette 2025/13)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **19.09.2023 JP 2023151438**

(71) Applicants:
• **JFE Steel Corporation**
  **Tokyo, 100-0011 (JP)**
• **JFE Mineral & Alloy Company, Ltd.**
  **Tokyo 105-0014 (JP)**

(72) Inventors:
• **KIYOIZUMI, Kota**
  **Tokyo 100-0011 (JP)**
• **ODA, Nobuhiko**
  **Tokyo 100-0011 (JP)**
• **MIWA, Yoshihiro**
  **Tokyo 100-0011 (JP)**
• **KAWABATA, Ryo**
  **Tokyo 100-0011 (JP)**
• **SUZUKI, Takeshi**
  **Tokyo 105-0014 (JP)**

(74) Representative: **Hoffmann Eitle**
**Patent- und Rechtsanwälte PartmbB**
**Arabellastraße 30**
**81925 München (DE)**

(54) **METHOD FOR OPERATING ELECTRIC FURNACE**

(57)    Provided is a method for operating an electric furnace that achieves high productivity and involves little wear of a refractory material when producing molten metal by melting a metal raw material in the electric furnace. Specifically, provided is a method for operating an electric furnace operated by accommodating molten metal, molten slag, a metal raw material, and an auxiliary raw material in this order in stacked layers within the electric furnace, and continuously discharging the molten metal and the molten slag, characterized in that the electric furnace includes a bottom portion, a furnace wall, a furnace cover, and stirring means for molten metal, input power per unit surface area of molten metal is set to 300 kW/m$^2$ or greater, and a stirring power density of the stirring means for the molten metal is set in a range of 5 to 100 W/t.

[Fig. 1]

EP 4 768 608 A1

## Description

Technical Field

The present invention relates to a method for operating an electric furnace for producing molten metal by melting a metal raw material containing reduced iron in an electric furnace, particularly, a submerged arc furnace. In the following description, the unit "t" of mass represents $10^3$ kg, and the unit "L" of volume represents $10^{-3}$ m$^3$. Symbol "N" added to the unit of the volume of a gas represents the volume of the gas under standard conditions, that is, at a temperature of 0°C and a pressure of 101325 Pa. In this specification, the numerical range "x to y" represents the range of x to y, both inclusive.

Background Art

In recent years, there has been a growing demand to reduce $CO_2$ emissions to mitigate environmental burdens. In the steel industry as well, the production of iron sources through the direct reduction (DR) process, instead of the blast furnace process that involves significant $CO_2$ emissions, is drawing attention. The DR process produces direct reduced iron (DRI) by reducing iron-containing agglomerates in a shaft furnace, for example. This reduced iron, along with other iron source raw materials such as iron scrap, is charged into an electric arc furnace (EAF) or a submerged arc furnace (SAF), for example, where the mixture is heated and melted, and slag is subsequently separated to yield molten iron.

In Japan, studies are being conducted to apply low-grade iron ore, such as that produced in Australia or India, to the DR process. With the currently available EAFs, it is difficult to perform melting of reduced iron produced from low-grade iron ore as a raw material. Thus, the use of submerged arc furnaces (SAFs) is being considered.

The production of molten iron with a SAF is a process of continuously supplying metal materials, such as scrap, pig iron, direct reduced iron (DRI), molten pig iron, or hot briquetted iron (HBI), and auxiliary raw materials into a submerged arc furnace (SAF) without opening its furnace cover, or charging the materials into the furnace using small buckets. This SAF melting process may be performed through flat bath operation. While the raw materials are charged into the submerged arc furnace, electrodes are inserted into molten slag to generate arcs between the plurality of electrodes or between an electrode and molten iron, and also, a current is passed through the raw materials and the slag. As a result, the raw materials are heated to melt through resistance heating and heat transfer.

One problem with the SAF melting process is the low efficiency of heat transfer to raw materials located away from the electrodes. For example, the process causes issues, such as a delay in the melting of metal raw materials, concentration gradients, unreliable temperature measurement, unreliable process control, and tapping of the molten metal at excessively high temperatures. To address such issues associated with non-uniform temperatures, electromagnetic stirring disclosed in Patent Literature 1 and gas stirring disclosed in Patent Literature 2 have been developed.

Citation List

Patent Literature

Patent Literature 1: Japanese Translation of PCT International Application Publication No. 2020-505579
Patent Literature 2: Japanese Patent Laid-Open No. 2002-317918

Summary of Invention

Technical Problem

However, the conventional techniques have the following problems. That is, the technique described in Patent Literature 1 is applied to so-called electric arc furnaces. In electric arc furnaces, the proportion of slag to molten metal is low, and thus, an operation is performed with a high Fe content. Accordingly, the technique cannot be directly applied to a case, in which molten metal, molten slag, a metal raw material, and an auxiliary raw material are accommodated in this order in stacked layers within an electric furnace, and the molten metal and the molten slag are continuously discharged to perform an operation under a reducing atmosphere. In addition, the technique described in Patent Literature 2 relates to an electric furnace related to a waste melting furnace and is not intended for mass production of molten metal. Therefore, it has been desirable to establish an operating method for an electric furnace that is applicable to an electric furnace, in particular, a submerged arc furnace, and that takes stable production of molten metal into consideration.

The present invention has been made in view of the foregoing circumstances, and an object of the present invention is to provide a method for operating an electric furnace that achieves high productivity and involves minimal wear of a refractory material when producing molten metal by melting a metal raw material in the electric furnace.

Solution to Problem

A method for operating an electric furnace according to the present invention, which advantageously solves the foregoing problems involves accommodating molten metal, molten slag, a metal raw material, and an auxiliary raw material in this order in stacked layers within the electric furnace and continuously discharging the molten metal and the molten slag, characterized in that the electric furnace includes a bottom portion, a furnace wall, a furnace cover, and stirring means for molten metal; input power per unit surface area of molten metal is set to 300 kW/m$^2$ or greater; and a stirring power density of the stirring means for the molten metal is set within the range of 5 to 100 W/t.

It should be noted that the method for operating an electric furnace according to the present invention may include the following features, for example, that are considered to be more preferable solution means.

(a) The electric furnace is an electric furnace capable of performing melting, without an intentional supply of oxygen gas.

(b) The stirring means is an electromagnetic stirrer provided at the bottom portion of the electric furnace.

(c) The stirring means is implemented by blowing a gas into the furnace from a submerged lance or from gas bottom-blowing means provided at the bottom portion of the electric furnace.

(d) A discharge port for the molten metal and a discharge port for the molten slag are provided in the furnace wall in different directions with respect to a center of a furnace bottom, and the molten metal is discharged by penetrating a plugging material filling the discharge port to open the discharge port.

(e) The metal raw material is composed partially or entirely of reduced iron.

(f) A basicity of the molten slag is in the range of 1.0 to 1.5, where the basicity of the molten slag is defined as a mass ratio of CaO to SiO$_2$ in the molten slag.

(g) An arc furnace is used as the electric furnace, and to ensure that a value of $E/\sqrt{I}$, obtained by dividing an arc voltage E (V), which is a voltage to ground, by a square root of a current I (A) per arc electrode, is 2.0 or less, at least one of an electrode height, the arc voltage, and the arc current is adjusted.

(h) The electric furnace is a submerged arc furnace.

Advantageous Effects of Invention

With the method for operating an electric furnace according to the present invention, it is possible to produce molten metal with high productivity by appropriately stirring the molten metal and applying sufficiently high input power, thereby suppressing a temperature rise of the molten metal and reducing wear of a refractory material.

Brief Description of Drawings

[Fig. 1] is a schematic longitudinal sectional view illustrating a method for operating an electric furnace according to an embodiment of the present invention, in which (a) illustrates an example of an electric furnace including an electromagnetic stirring facility, and (b) illustrates an example of bottom-blown stirring.

[Fig. 2] is a graph representing the influence of the stirring power density for molten pig iron on the relationship between the input power per unit surface area of the molten pig iron in an electric furnace and the temperature of the molten pig iron.

[Fig. 3] is a schematic longitudinal sectional view representing a submerged arc furnace that does not include a function for stirring molten metal.

Description of Embodiments

Hereinafter, an embodiment of the present invention will be specifically described. The following embodiment only illustrates examples of a facility and a method for embodying the technical idea of the present invention. Thus, the configuration of the present invention is not limited thereto. That is, the technical idea of the present invention may be changed in various ways within the technical scope recited in the claims.

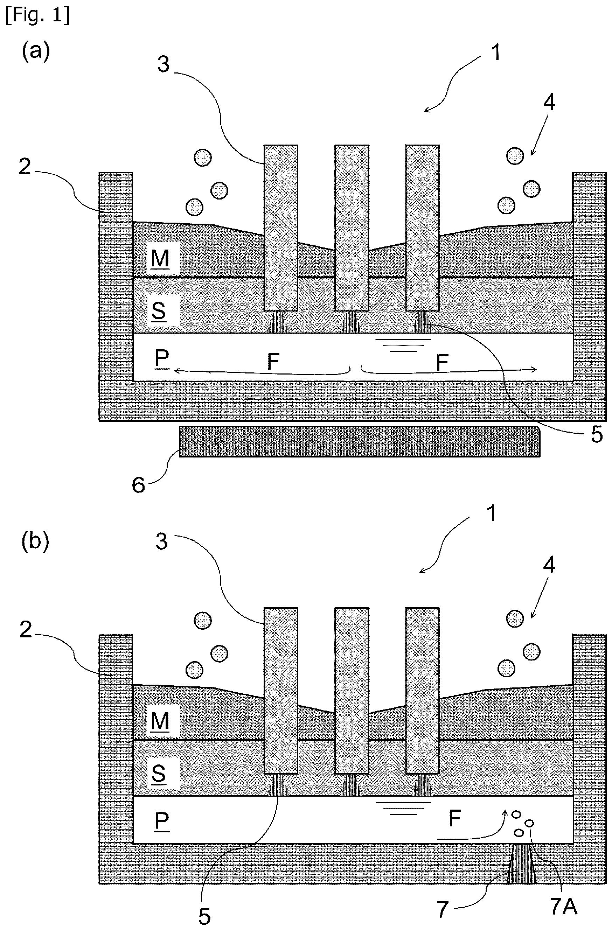

Fig. 1 is a schematic longitudinal sectional view illustrating the configuration of a submerged arc furnace suitable for use in a method for operating an electric furnace according to an embodiment of the present invention. Fig. 1(a) illustrates an example of a submerged arc furnace including an electromagnetic stirrer 6 formed of a linear motor. Fig. 1(b) illustrates an example in which bubbles 7A are blown into the furnace by gas blowing through a bottom-blown tuyere 7. The submerged arc furnace 1 accommodates molten pig iron P, molten slag S, and raw materials M, which include a metal raw material and an auxiliary raw material, in stacked layers on the inner side of a furnace wall 2. In the submerged arc furnace 1, electrodes 3 are inserted into the molten slag S to cause arcs to be generated either between the plurality of electrodes 3 or between an electrode 3 and the molten pig iron P, thereby heating and melting the raw materials through radiation heating. Alternatively, the raw materials are heated and melted through resistance heating by allowing a current to flow between the electrodes, the raw materials, the slag, and the molten pig iron. In the present embodiment, electrical heating is performed without intentional supply of oxygen, that is, in a so-called reducing atmosphere. The phrase "without intentional supply of oxygen" herein does not exclude the mixing of air during the charging of the raw materials, from a gas blown into the furnace, or through gaps in a refractory material, for example. It means that oxidation heat is not utilized to heat the raw materials.

In the present embodiment, it is preferable to continuously produce molten metal by charging a raw material 4 into the furnace from above. In this case, the submerged arc furnace 1 preferably has a discharge port for the molten metal and a discharge port for the molten slag that are arranged to face different directions with respect to the center of the furnace bottom. It is also preferable to fill each discharge port with a plugging material and, when a predetermined amount of molten metal has been retained, discharge the molten metal by penetrating the plugging material to open the discharge port.

In the present embodiment, an iron source raw material containing reduced iron is charged into the submerged arc furnace 1. Along with this, the method includes adding, as an auxiliary raw material, at least one of a slag forming material for adjusting the basicity ($CaO/SiO_2$) of the molten slag S formed on the molten pig iron P and a carbonaceous material for adjusting the C content in the molten pig iron P. The basicity ($CaO/SiO_2$) of the molten slag is the mass ratio of CaO to $SiO_2$ in the molten slag.

In the present embodiment, the iron source raw material melted in the submerged arc furnace 1 contains reduced iron. The reduced iron may be previously produced by the direct reduction process. Alternatively, commercially available reduced iron may be purchased for use. It is also possible to use iron scrap or scale as the iron source raw material. The mass percentage of the reduced iron in the iron source raw material is preferably 50 to 100%.

When the metallization rate of the reduced iron is 60% or greater, the electric power unit consumption becomes low, resulting in excellent energy efficiency. The upper limit of the metallization rate is not particularly restricted. If the metallization rate is excessively high, reduced iron, which is the raw material 4 charged into the submerged arc furnace 1 from above the molten slag S, may become electrically conductive within the slag, which may decrease the resistance heat. Thus, the upper limit of the metallization rate is preferably set to about 90%.

As the slag forming material, it is preferable to add limestone ($CaCO_3$) or quicklime (CaO) as a CaO source, and silica ($SiO_2$) as a $SiO_2$ source. The slag forming material may be in lump form or powder form, and is preferably used either in combination with, or by being mixed with the metal raw material, for example, by granulation. The basicity ($CaO/SiO_2$) of the molten slag S is preferably set within the range of 1.0 to 1.5. When the basicity of the molten slag is within this range, the composition of the molten slag becomes similar to that of blast furnace slag, making it suitable for reuse as a base course material, such as cement. In addition, the total iron content in the molten slag is preferably 5.0 mass% or less. This can be achieved by intentionally suppressing the supply of oxygen gas, which improves the iron yield.

As the carbonaceous material, coke or coal can be used. Biomass charcoal may also be used. The carbonaceous material may be in lump form or powder form, and is preferably used in combination with, or by being mixed with the metal raw material, for example, by granulation. The C content in the molten pig iron P is preferably adjusted to be within the range of 2.0 to 5 mass%. When the C content in the molten pig iron P falls within this range, the molten pig iron P can be suitably used as pig iron, either directly or as a steelmaking raw material for the next step.

In the present embodiment, electrical energy is used to melt the metal raw material, for example, reduced iron. Thus, the effect of reducing $CO_2$ emissions can be obtained as compared to a case where combustion heat of carbon is used, such as in the blast furnace process. It is preferable to use electrical energy generated from renewable energy sources.

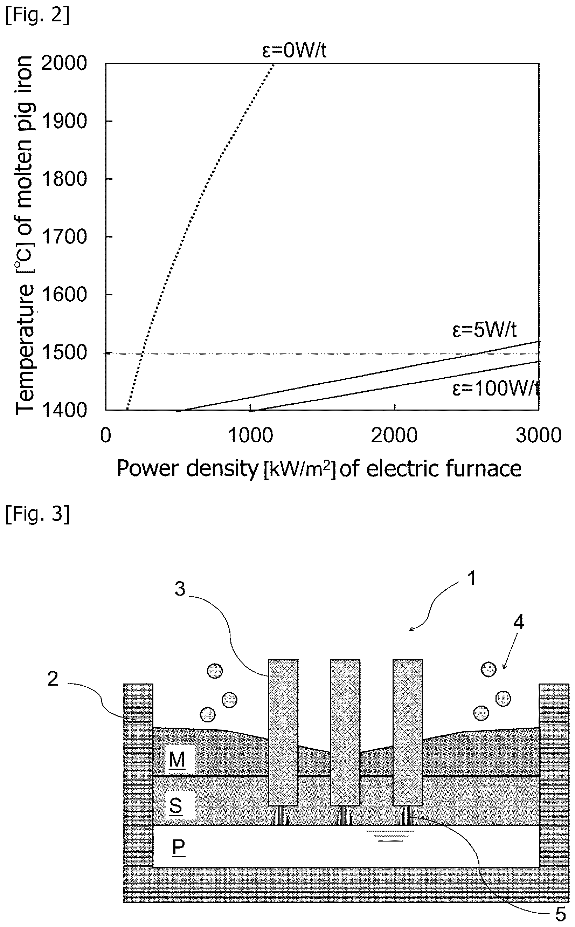

When a method for operating an electric furnace for producing molten metal is performed as in the present embodiment, using a submerged arc furnace that does not have a function for stirring molten metal, such as the one illustrated in Fig. 3, the following problems may arise. In such a submerged arc furnace, there is no oxygen supply from the outside, and no solid or liquid flow is generated within the furnace. Thus, heat transfer from the molten metal P to the raw materials M via the molten slag S occurs almost exclusively by thermal conduction. In addition, the electrodes 3 are typically arranged at the center when viewed from above. Thus, heat supply to the raw materials M is limited. Even if the input power is increased, most of the input power is consumed in heating the molten metal P, leaving only a small amount available for melting the raw materials M, and in particular, the amount of heat supplied to the raw materials M located away from the electrodes 3 is small. The temperature of the molten pig iron reaches 1500°C or greater at a power density of approximately 250 kW/m$^2$ per unit surface area of the molten pig iron. Since typical refractory materials experience a sharp increase in the wear rate at temperatures of 1550°C or greater, it follows that the refractory materials are likely to undergo significant wear under these conditions. Therefore, submerged arc furnaces are typically operated at a power density of approximately 250 kW/m$^2$ per unit surface area of molten pig iron. If a large amount of molten metal is to be produced using such furnaces, a large number of large-scale facilities are required, resulting in a substantial capital investment. Therefore, through their studies, the inventors have discovered the relationship between the stirring power density $\varepsilon$ and the temperature of the molten pig iron illustrated in Fig. 2, enabling the application of a high power density while suppressing the temperature of the molten pig iron.

As a result of thorough examinations, the inventors have found that the relationship between the power density per unit surface area of molten pig iron and the temperature of the molten metal P depends on the stirring power. Fig. 2 shows the results of the examinations. For example, in a typical submerged arc furnace, the stirring power density is $\varepsilon = 0$, which can explain why conventional submerged arc furnaces are operated at about 250 kW/m². In addition, the inventors have newly found that applying even a small amount of stirring power can input a large amount of power into the furnace without increasing the temperature of the molten metal P.

The submerged arc furnace 1 of the present embodiment includes a bottom portion, the furnace wall 2, a furnace cover (not illustrated), and a stirring means for molten metal. The input power per unit surface area of molten metal is set to 300 kW/m² or greater, and the stirring power density $\varepsilon$ of the stirring means for the molten metal is set in the range of 5 to 100 W/t, so that high productivity and stable operation are achieved without an enormous investment in facilities. The input power per unit surface area of molten metal is preferably set in the range of 500 to 2500 kW/m². The stirring power density $\varepsilon$ is preferably set in the range of 10 to 30 W/t.

If the stirring power density is less than the lower limit, overheating of the molten metal may occur, which may cause accelerated wear of the refractory material of the furnace wall, for example. If the stirring power density is over the upper limit, the flow speed of the molten metal may become too high, which may cause accelerated wear of the refractory material.

As an example of the stirring means for molten metal, it is preferable to dispose the electromagnetic stirrer 6, such as the one illustrated in Fig. 1(a), at the bottom portion. The bottom portion where the electromagnetic stirrer 6 is disposed is preferably formed of a non-magnetic material. The stirring power density of electromagnetic stirring can be determined through numerical analysis or experimentation, for example, relative to the output of the electromagnetic stirring. For example, the stirring power density of electromagnetic stirring can be set to about 0.5% of the output power of the electromagnetic stirring. The electromagnetic stirrer 6 can be formed with a linear motor, for example, and can be configured to generate a travelling magnetic field in the direction from the center of the furnace bottom toward the furnace wall or in the direction from the furnace wall toward the center of the furnace bottom. Alternatively, a plurality of electromagnetic stirrers may be arranged on opposite sides across the center of the furnace bottom, and configured to generate travelling magnetic fields in different directions, or electromagnetic stirrers may be arranged circumferentially to generate a swirling flow in the molten metal. The flow of the molten metal induced by the electromagnetic stirring becomes a flow along the furnace bottom, for example, and reverses on the furnace wall, generating heat transfer based on forced convection on the surface of the molten metal.

As another example of the stirring means for molten metal, it is preferable to dispose the bottom-blown tuyere 7, such as the one illustrated in Fig. 1(b), at the furnace bottom, and blow a gas into the furnace to induce stirring by means of the bubbles 7A. It is also possible to blow a gas into the furnace from the distal end of a submerged lance, instead of the bottom-blown tuyere. The stirring power density can be calculated with Expression (1) below based on the flow rate of the gas blown into the furnace and the like.

$$\varepsilon = (371 \times Q \times T_m / W_m) \times [\ln \{1 + (9.8 \times \rho_m \times h/P)\} + (1 - T_g/T_m)]\ (1),$$

where $\varepsilon$ represents the stirring power density (W/t),
Q represents the total flow rate of gas (Nm³/sec),
$T_m$ represents the temperature (K) of the molten metal,
$W_m$ represents the weight (t) of the molten metal,
$\rho_m$ represents the density (t/m³) of the molten steel,
h represents, for a top-blown gas, the distance (m) from the surface of the molten metal to the distal end of the lance, and represents, for a bottom-blown gas, the distance (m) from the surface of the molten metal to the bottom of a ladle,
P represents the atmospheric pressure (101.325 kPa), and
$T_g$ represents the temperature (K) of the gas.

Although the foregoing embodiment illustrates an example of an electric furnace that is approximately circular when viewed from above, the shape of the electric furnace is not limited, and may be elliptical or rectangular, for example.

The electric furnace 1 of the present embodiment is preferably an arc furnace. In the submerged arc furnace suitably used in the present embodiment, a current flows between the electrodes, the raw materials, the slag, and the molten pig iron. Thus, compared to an electric furnace that generates arcs in the air, the voltage to ground typically becomes lower when the same value of current is supplied. This is due to the significantly higher electrical conductivity of the slag compared to that of the air. Therefore, it is preferable to adjust at least one of the electrode height, the arc voltage, and the arc current, so that $E/\sqrt{I}$, the value obtained by dividing the arc voltage E (V),which is the voltage to ground, by the square root of the current I (A) per arc electrode becomes 2.0 or less. More preferably, the index $E/\sqrt{I}$ is set to 1.5 or less.

Example

Inspections were conducted using the submerged arc furnace 1 having a capacity of 4 to 6 tons, such as the one illustrated in Fig. 1. Table 1 summarizes the specifications of a three-phase AC electric furnace as the arc furnace used in the inspections.

[Table 1]

| Item | Electric furnace |
|---|---|
| Power supply | Three-phase AC |
| Capacity of transformer | 4.0 MVA |
| Electrodes | Graphite electrodes |
| Electrode diameter | 16 inch(0.41m) |
| Number of electrodes | 3 |
| Outer diameter/ Height | 3.1m/2.6m |

Shredder scrap, a carbonaceous material, and blast furnace slag were charged into the submerged arc furnace 1, and a current was passed through the furnace to perform initial melting. The amounts of the materials previously charged into the furnace were adjusted to produce 750 kg of molten pig iron and 1500 kg of slag. Once the materials previously charged had completely melted, a pre-blended raw material mixture of reduced iron, as a main raw material, and an auxiliary raw material, such as a carbonaceous material, lime, alumina, and an MgO source, for adjusting the C concentration in the molten pig iron and the composition of slag, was continuously charged into the furnace. The target maximum amount of the molten pig iron to be obtained was set to 4 tons, and was adjusted based on the amounts of the raw materials charged into the furnace. The final thickness of the molten pig iron reached 140 mm.

The input power of the submerged arc electric furnace was controlled by adjusting the tap voltage and the electrode position, and the power was adjusted to satisfy predetermined conditions.

A transformer with a 200 kVA rating was used for an electromagnetic stirring device used for electromagnetic stirring, and its output was adjusted. The power factor at the maximum output was approximately 50%, allowing for a maximum output of about 100 kW. Since it is difficult to directly measure the value of the contribution rate of electromagnetic stirring, it was calculated using a numerical analysis method in advance and set to 0.5%. This value is a typical value for electromagnetic stirring devices and does not vary significantly. Table 2 shows the operating conditions.

To perform bottom-blown stirring, a porous nozzle was disposed, and stirring was performed with an $N_2$ gas. The stirring power density was calculated with Expression (1) above, with the bath density set to 7.0 t/m$^3$, the height h of the molten metal set to 0.14 m, the temperature Tg of the gas set to 300 K, and the temperature Tm of the molten metal set to 1800 K. Table 3 shows the operating conditions.

In the column of "Determination," the wear amount (mm) of the refractory material was evaluated at each level. The wear amount under the conditions of Test No. 1 was normalized to 1, and values equal to or greater than twice the amount were evaluated as "Poor." In addition, productivity was evaluated based on the time required to melt all the raw materials after reduced iron was charged into the furnace. When 4 tons of molten pig iron were not produced within 100 minutes, the productivity was evaluated as "Poor." Otherwise, the productivity was evaluated as "Good." Tables 2 and 3 show the results. Tables 2 and 3 also show the value of the index $E/\sqrt{I}$ during operation.

[Table 2]

| No. | Stirring | Power of electric furnace | Power density | Electromagnetic stirring power | Stirring power density | Wear amount of refractory material | Melting time | E/√I | Determination | Remarks |
|---|---|---|---|---|---|---|---|---|---|---|
| | Means | kW | kW/m$^2$ | kW | W/t | - | min | V/√A | | |
| 1 | None | 1420 | 280 | 0 | - | 1.0 | 114 | 0.89 | Poor | Comparative Example |
| 2 | None | 2790 | 550 | 0 | - | 4.0 | 75 | 1.09 | Poor | Comparative Example |
| 3 | None | 3550 | 700 | 0 | - | 9.0 | 61 | 1.19 | Poor | Comparative Example |
| 4 | Electromagnetic | 1420 | 280 | 20 | 25 | 0.9 | 110 | 0.89 | Fair | Inventive Example |
| 5 | Electromagnetic | 2790 | 550 | 1 | 1.3 | 3.5 | 72 | 1.09 | Fair | Inventive Example |
| 6 | Electromagnetic | 2790 | 550 | 5 | 6.3 | 1.3 | 71 | 1.09 | Good | Inventive Example |
| 7 | Electromagnetic | 2790 | 550 | 40 | 50 | 1.7 | 71 | 1.09 | Good | Inventive Example |
| 8 | Electromagnetic | 3550 | 700 | 100 | 125 | 3.1 | 63 | 1.19 | Fair | Inventive Example |
| 9 | Electromagnetic | 3550 | 700 | 20 | 25 | 1.4 | 58 | 1.19 | Good | Inventive Example |
| 10 | Electromagnetic | 3550 | 700 | 100 | 125 | 3.0 | 54 | 1.19 | Fair | Inventive Example |

[Table 3]

| No. | Stirring | Power of Electric Furnace | Power density | Flow rate of bottom-blown gas | Stirring power density | Wear amount of refractory material | Melting time | E/√I | Determination | Remarks |
|---|---|---|---|---|---|---|---|---|---|---|
| | Means | kW | kW/m² | NL/min | W/t | - | min | V/√A | | |
| 1 | None | 1420 | 280 | 0 | - | 1.0 | 114 | 0.89 | Poor | Comparative Example |
| 2 | None | 2790 | 550 | 0 | - | 4.0 | 75 | 1.09 | Poor | Comparative Example |
| 3 | None | 3550 | 700 | 0 | - | 9.0 | 61 | 1.19 | Poor | Comparative Example |
| 11 | Bottom blown | 1420 | 280 | 20 | 7.8 | 1.1 | 120 | 0.89 | Poor | Comparative Example |
| 12 | Bottom blown | 2790 | 550 | 2 | 0.8 | 0.9 | 75 | 1.09 | Good | Inventive Example |
| 13 | Bottom blown | 2790 | 550 | 5 | 2.0 | 1.2 | 74 | 1.09 | Good | Inventive Example |
| 14 | Bottom blown | 2790 | 550 | 10 | 3.9 | 1.4 | 72 | 1.09 | Good | Inventive Example |
| 15 | Bottom blown | 3550 | 700 | 20 | 7.8 | 1.2 | 65 | 1.19 | Good | Inventive Example |
| 16 | Bottom blown | 3550 | 700 | 100 | 39 | 1.1 | 68 | 1.19 | Good | Inventive Example |
| 17 | Bottom blown | 3550 | 700 | 200 | 78 | 1.2 | 70 | 1.19 | Good | Inventive Example |

Each of Inventive Examples, where the input power per unit surface area of molten metal was set to 300 kW/m$^2$ or greater, and the stirring power density of the stirring means for the molten metal was set within the range of 5 to 100 W/t, demonstrates excellent productivity and wear resistance of the refractory material. Each of Comparative Examples, which falls outside the conditions of the invention, was found to be inferior in terms of either productivity or the wear level of the refractory material.

Reference Signs List

1       electric furnace (submerged arc furnace, SAF)
2       furnace wall
3       electrode
4       raw material (charged into furnace)
5       arc
6       electromagnetic stirrer (linear motor)
7       bottom-blown tuyere
7A      bubbles
P       molten pig iron (molten metal)
S       molten slag
M       raw materials
F       flow (of molten metal)

**Claims**

1.  A method for operating an electric furnace comprising accommodating molten metal, molten slag, a metal raw material, and an auxiliary raw material in this order in stacked layers within the electric furnace, and continuously discharging the molten metal and the molten slag,
    **characterized in that**:

    the electric furnace includes a bottom portion, a furnace wall, a furnace cover, and stirring means for molten metal,
    input power per unit surface area of molten metal is set to 300 kW/m$^2$ or greater, and
    a stirring power density of the stirring means for the molten metal is set in a range of 5 to 100 W/t.

2.  The method for operating an electric furnace according to claim 1, wherein the electric furnace is an electric furnace capable of performing melting, with an oxygen gas intentionally not supplied.

3.  The method for operating an electric furnace according to claim 1, wherein the stirring means is an electromagnetic stirrer provided at the bottom portion of the electric furnace.

4.  The method for operating an electric furnace according to claim 1, wherein the stirring means is achieved by blowing a gas into the furnace through a submerged lance or from gas bottom-blowing means provided at the bottom portion of the electric furnace.

5.  The method for operating an electric furnace according to claim 1, wherein

    a discharge port for the molten metal and a discharge port for the molten slag are provided in the furnace wall in different directions with respect to a center of a furnace bottom, and
    the molten metal is discharged by penetrating a plugging material filling the discharge port to open the discharge port.

6.  The method for operating an electric furnace according to claim 1, wherein the metal raw material is composed partially or entirely of reduced iron.

7.  The method for operating an electric furnace according to claim 5, wherein a basicity of the molten slag is in a range of 1.0 to 1.5, where the basicity of the molten slag is a mass ratio of CaO to SiO$_2$ in the molten slag.

8.  The method for operating an electric furnace according to claim 1, wherein

an arc furnace is used as the electric furnace, and

to allow a value of E/√I obtained by dividing an arc voltage E (V) that is a voltage to ground by a square root of a current I (A) per arc electrode to be 2.0 or less, at least one of an electrode height, the arc voltage, and the arc current is adjusted.

9. The method for operating an electric furnace according to claim 1, wherein the electric furnace is a submerged arc furnace.

[Fig. 1]

(a)

(b)

[Fig. 2]

[Fig. 3]

## INTERNATIONAL SEARCH REPORT

| International application No. |
|---|
| **PCT/JP2024/027268** |

**A. CLASSIFICATION OF SUBJECT MATTER**

*C21B 11/10*(2006.01)i; *C21C 5/52*(2006.01)i
FI: C21B11/10; C21C5/52

According to International Patent Classification (IPC) or to both national classification and IPC

**B. FIELDS SEARCHED**

Minimum documentation searched (classification system followed by classification symbols)

C21B11/10; C21C5/52

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2020/217890 A1 (NIPPON STEEL CORPORATION) 29 October 2020 (2020-10-29) paragraphs [0078]-[0103] | 1-2, 4 |
| Y | | 3, 5-9 |
| Y | JP 62-146215 A (ISHIKAWAJIMA-HARIMA HEAVY INDUSTRIES CO., LTD.) 30 June 1987 (1987-06-30) page 4, lower left column, line 15 - page 5, upper left column, line 1 | 3, 8-9 |
| Y | JP 2004-137572 A (NIPPON STEEL CORPORATION) 13 May 2004 (2004-05-13) paragraphs [0026], [0047] | 3, 8-9 |
| Y | WO 2014/003119 A1 (NIPPON STEEL & SUMITOMO METAL CORPORATION) 03 January 2014 (2014-01-03) paragraphs [0023]-[0024] | 5, 7 |
| Y | JP 2015-227733 A (NIPPON STEEL & SUMIKIN ENGINEERING CO., LTD.) 17 December 2015 (2015-12-17) claim 1 | 6 |

☐ Further documents are listed in the continuation of Box C.  ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **20 September 2024** | **08 October 2024** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (July 2022)

# EP 4 768 608 A1

**INTERNATIONAL SEARCH REPORT**
Information on patent family members

International application No.

**PCT/JP2024/027268**

| Patent document cited in search report | | | Publication date (day/month/year) | Patent family member(s) | | | Publication date (day/month/year) |
|---|---|---|---|---|---|---|---|
| WO | 2020/217890 | A1 | 29 October 2020 | US | 2022/0195546 | A1 | |
| | | | | paragraphs [0112]-[0162] | | | |
| | | | | EP | 3960880 | A1 | |
| | | | | CN | 113710819 | A | |
| | | | | KR | 10-2021-0151968 | A | |
| | | | | BR | 112021021108 | A | |
| | | | | TW | 202039867 | A | |
| | | | | ES | 2961323 | T | |
| JP | 62-146215 | A | 30 June 1987 | (Family: none) | | | |
| JP | 2004-137572 | A | 13 May 2004 | CN | 1497054 | A | |
| WO | 2014/003119 | A1 | 03 January 2014 | US | 2014/0247856 | A1 | |
| | | | | paragraph [0039] | | | |
| | | | | US | 2014/0291901 | A1 | |
| | | | | US | 2015/0135896 | A1 | |
| | | | | WO | 2014/003123 | A1 | |
| | | | | WO | 2014/003127 | A1 | |
| | | | | EP | 2757163 | A1 | |
| | | | | EP | 2759606 | A1 | |
| | | | | EP | 2767597 | A1 | |
| | | | | CA | 2851963 | A | |
| | | | | CN | 103930573 | A | |
| | | | | KR | 10-2014-0085506 | A | |
| | | | | BR | 112014011858 | A | |
| | | | | IN | 7281DEN2014 | A | |
| | | | | CA | 2851604 | A | |
| | | | | CA | 2852500 | A | |
| | | | | CN | 103930574 | A | |
| | | | | KR | 10-2014-0079805 | A | |
| | | | | CN | 104039987 | A | |
| | | | | KR | 10-2014-0085499 | A | |
| | | | | BR | 112014011250 | A | |
| | | | | IN | 7279DEN2014 | A | |
| | | | | IN | 7659DEN2014 | A | |
| | | | | BR | 112014011428 | A | |
| JP | 2015-227733 | A | 17 December 2015 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020505579 W

- JP 2002317918 A